# NEW EUROPEAN PATENT SPECIFICATION

(11) **EP 0 414 024 B2**
(45) Date of publication and mention of the opposition decision: **01.05.1996**
(45) Mention of the grant of the patent: 23.12.1992
(21) Application number: 90115053.2
(22) Date of filing: 06.08.1990
(51) Int. Cl.: A23L 1/32, A23L 1/035, A23L 1/24

(54) **Process for the preparation of an emulsifying agent**
Verfahren zur Herstellung eines Emulgators
Procédé de préparation d'un émulsionnant

(30) Priority: 21.08.1989 US 396851
(43) Date of publication of application: 27.02.1991
(73) Proprietor: SOCIETE DES PRODUITS NESTLE S.A., CH-1800 Vevey (CH)
(72) Inventor: Castle, Edward R., Gaylordsville, Conn. 06755 (US); Kwon, Steven Soon-Young, New Milford, Conn. 06776 (US); Vadehra, Dharam Vir, New Milford, Conn. 06776 (US)

(56) References cited:
- EP-A- 0 260 573
- US-A- 3 260 606
- US-A- 4 034 124
- PATENT ABSTRACTS OF JAPAN, vol. 13, no. 29, (C-562)[3377], 23rd January 1989; & JP-A-63 233 750 (Q.P. CORP.) 29-09-1988
- PATENT ABSTRACTS OF JAPAN, vol. 9, no. 192 (C-296)[1915], 8th August 1985; & JP-A-60 62 951 (ASAHI DENKA KOGYO K.K.) 11-04-1985
- PATENT ABSTRACTS OF JAPAN, vol. 11, no. 206 (C-433)[2653], 3rd July 1987; & JP-A-62 29 950 (Q.P. CORP.) 07-02-1987

## Description

The present invention relates to a process for the preparation of an emulsifying agent more particularly to an enzyme modified material containing a lipid together with a lipoprotein and/or a protein.

Egg yolk is often used as an emulsifying agent in mayonnaise, soups and sauces, etc. However, such emulsions cannot be heat sterilised because the sterilisation temperature breaks the emulsion owing to the coagulation of the egg yolk. It is therefore often necessary that the pH of emulsions stabilised by egg yolk be lower than desired for taste requirements in order to obtain satisfactory microbiological storage stability.

Japanese Patent Application No. 56465/62 describes a process for producing a butter-like food with the flavour of eggs, in which a group of enzymes obtained from fungi is added to egg yolk or whole egg liquid to effect the enzymatic action until it loses its thermosetting properties, inactivating the enzyme, and adding edible oil and a hydrophilic emulsifier to the liquid to emulsify. The group of enzymes may include proteolytic enzymes, a lipase, a lecithin decomposition enzyme, amylases, as well as an enzyme participating in nucleic acid decomposition and an enzyme acting on a flavour precursor. However, in this process, a considerable amount of emulsifier is added to emulsify the product.

United States Patent No. 4034124 describes a water and oil emulsion which contains a phospholipo-protein containing material which has been modified by phospholipase A.

US-A-3260606 claims a method for treating egg yolk which comprises treating the egg with an enzymatic system produced by the cultivation of a mould microorganism , at a pH between 3.5 and 5.0 until the egg is rendered thermally non-coagulative.

JP-A-63-233750 discloses a process wherein a raw material containing a phospholipid is treated with a phospholipase, the reaction mixture is contacted with a protease to deactivate the phospholipase, and the protease is then heat-deactivated.

JP-A-60-62951 discloses preparing an emulsion by combining (a) an aqueous phase containing non-fat milk solids and enzyme-degraded egg yolk; (b) an oil phase; and (c) an emulsifying agent where the enzymes used for protein degradation of the egg yolk are obtained from fungi and contain protease as their main component, and also lipase, phospholipase and amylase.

JP-A-62-29950 discloses preparing an emulsion by combining (a) an aqueous phase, (b) an oil phase, and (c) an emulsifying agent obtained by enzyme degradation of egg yolk with either a protease, a lipase, or a phospholipase.

We have now developed a process for the preparation of emulsifying agents by enzyme modifying a biological material containing a lipid as well as a lipoprotein and/or a protein e.g. egg yolk, which involves treating the biological material with a protease and a lipase to give a product which is a stable emulsifying agent without the addition of a further emulsifier and imparting superior heat-stability to a water and oil emulsion when compared with the emulsion described in USP 4034124.

Accordingly, the present invention provides a process for the preparation of an emulsifying agent which comprises treating a biological material containing a lipid as well as a lipoprotein and/or a protein with a protease and a lipase and pasteurising the product characterised in that the treatment with the protease and the lipase is carried out sequentially in any order.

The process of this invention is applicable to any biological material containing a lipid as well as a lipoprotein and/or a protein especially materials containing phospholipoprotein such as egg yolk, soybean, wheat protein, casein, whole egg, cream, butter, whey anhydrous milk fat etc. Especially desirable emulsifying agents are obtained when the biological material contains phospholipids and/or phospholipoproteins.

When egg yolk is used as the biological material, the egg yolk may be fresh, frozen or dehydrated and it may be treated alone or in the presence of sugar or salt.

The treatment with the protease and the lipase may be carried out in any order but preferably the biological material is treated with a lipase after being treated with a protease.

Before treatment, the biological material is advantageously heated to the temperature of the treatment in a vessel suitable for controlling temperature and, if desired, agitation conditions.

Any protease may be employed in the process of this invention. The amount of protease of approximately 600 USP units per mg used may be from 0.025 to 2%, preferably from 0.04 to 1% and especially from 0.05 to 0.5% by weight based on the weight of the biological material. The protease is conveniently dissolved in water before mixing with the biological material or, if desired, a small amount of water sufficient to dissolve the enzyme, for example, from about 2 to 5% by weight based on the weight of the biological material, may be added to the biological material before mixing with the enzyme. Conveniently, the enzyme is dispersed uniformly throughout the biological material, for instance by agitation.

The upper limit of the temperature of the treatment with the protease is not usually above 65°C because at this temperature denaturation of the enzymes has commenced. Therefore the temperature is preferably from 0°C to 55°C more preferably from 35°C to 45°C and especially from 37°C to 43°C.

The treatment with the protease is preferably carried out at a pH from 4 to 8.5. For instance, the treatment of egg yolk is preferably performed at a pH from 6.05 to 6.15 which is the natural pH of fresh egg yolk. If desired, adjustment of the pH may be effected by any suitable food acceptable acidulants such as HCl, acetic acid, lactic acid or citric acid etc, or alkalis such as sodium hydroxide, potassium hydroxide, sodium citrate or disodium phosphate etc.

The duration of the treatment with the protease may vary widely depending, for example, on the particular protease used, the concentration of the protease and the temperature. For example, the duration of the incubation may be up to 24 hours or more but typically the time ranges from 30 minutes to 2.5 hours and more usually from 1 to 2 hours.

Any lipase may be used in the process and may be derived from a microorganism such as Mucor sp., Aspergillus niger, Aspergillus oryzae, Rhizopus oryzae, Candida cylindracea, Penicillium sp. or from animal origin such as pancreatic lipase from porcine pancreas. Pancreatic lipase is preferred. Some commercially available pancreatic lipases contain a small amount of phospholipase A as impurity.

Before treatment with the lipase, the pH is conveniently adjusted to the optimum pH value of the lipase which may be from 4 to 8.5 depending on the lipase used e.g. when pancreatic lipase is used, the pH is advantageously adjusted to from 4.5 to 7.5. The adjustment of the pH may be effected with any suitable food-acceptable acidulants such as HCl, acetic acid, lactic acid or citric acid, or alkalis such as sodium hydroxide, potassium hydroxide, sodium citrate or disodium phosphate etc.

The amount of lipase of approximately 24 USP units per mg used may be from 0.025 to 3%, preferably from 0.05 to 2% and especially from 0.075 to 1% by weight based on the weight of the biological material. The lipase is conveniently dissolved in water before mixing with the biological material or, if desired, a small amount of water, sufficient to dissolve the lipase for example from 2 to 20% by weight based on the weight of the biological material, may be added to the biological material before mixing with the lipase. Conveniently, the lipase is dispersed uniformly throughout the biological material, for instance, by agitation.

The temperature of the treatment with the lipase is not usually above 60°C because of the temperature denaturation of the enzymes, and is generally from 0°C to 55°C, preferably from 35°C to 45°C and especially from 37°C to 43°C. However, significant lipolysis can take place at higher temperature e.g. pasteurisation temperatures, before denaturation has occurred, and in some cases the treatment with the lipase takes place during the pasteurisation step.

The duration of the treatment with the lipase may vary widely depending, for example, on the particular lipase used, the concentration of the lipase and the temperature. For example, the duration of the incubation may be up to 24 hours or more but typically the duration is from 15 minutes to 3 hours for instance from 20 minutes to 2 hours. When the treatment with the lipase takes place during the pasteurisation step, the duration may be less than 15 minutes.

Generally, after treatment with the enzymes, the product is pasteurised by any conventional method e.g. 70°-75°C for a period of from 5 to 30 minutes.

The product may be used in effective amounts as a general emulsifier which is heat stable in such systems as oil in water or water in oil emulsions e.g. sauces; mayonnaises; ice cream; emulsified dairy products; coffee whiteners; aseptic sauces; canned sauces and hot and cold fill sauces. The amount of product in such systems is usually from 0.5 to 3% by weight based on the total weight of the system.

The oil and water system containing the emulsifying product can withstand high temperature (60°C to 100°C) retorting and UHT processing and may be stored in a deep-frozen, refrigerated or room temperature state and has a long shelf-life.

The following Examples further illustrate the present invention:

### Example 1

100 g of (10% salted) egg yolk is heated to 43± 2°C in a Lee Kettle and 0.1 g of a protease enzyme (Prozyme 6 Amano International Enzymes) in aqueous solution is added and the mixture incubated for 1.5 hours at 43 ± 2°C at pH 6.1.

After the incubation, the pH is adjusted to 5.0 with food grade citric acid and 0.2 g of pancreatic lipase (Pancrelipase USP, Biocon) in aqueous solution is added and the mixture incubated for 30 minutes at 43 ± 2°C.

After incubation with the lipase, the product is pasteurised at 75°C for 5 minutes.

### Example 2

100 g of egg yolk (10% salted) is heated to 43°C + 2°C in a Lee kettle and 0.10 g of a protease enzyme (Prozyme 6, Amano International Enzyme) in aqueous solution is added and the mixture incubated with constant agitation for 60 min at 43°C ± 2°C at pH of egg yolk (pH 6.1 ± 0.1).

After the incubation, 0.05 g of lipase (Biocon Pancrelipase USP Biocon) in aqueous solution is added and the mixture is incubated with constant agitation for 60 min at 43°C ± 2°C at pH as is (about 6.0).

After incubation with the lipase, the product is pasteurised at 75°C for 5 min.

### Example 3

100 g of egg yolk (salted, 10%) is heated to 43°C ± 2°C in a Lee kettle and 0.05 g of protease enzyme (Prozyme 6, Amano International Enzyme) in aqueous solution is added and the mixture incubated for 60 min at 43°C ± 2°C at pH 6.1.

After the incubation, 0.05 g of lipase (Pancrelipase US Biocon) in aqueous solution is added and the mixture is incubated for 60 min at 43°C ± 2°C at pH as is.

After incubation, the product is pasteurised at 75°C for 5 min.

### Example 4

100 g of egg yolk (salted, 10%) is heated to 55°C ± 2°C in a Lee kettle and 0.05 g of protease enzyme (Prozyme 6) in aqueous solution is added and the mixture incubated for 60 min at 55°C ± 2°C at pH as is (around 6.0).

After the incubation, 0.05 g of lipase (Pancrelipase USP) in aqueous solution is added and the mixture is incubated for 60 min at 55°C ± 2°C at pH as is.

After the incubation, the product is pasteurised at 75°C for 5 min.

### Example 5

100 g of egg yolk (salted, 10%) is heated to 55°C + 2°C in a Lee kettle, the pH adjusted with food grade sodium hydroxide (10%) solution to pH 7.5, 0.05 g of protease enzyme (Prozyme 6) in aqueous solution is added and the mixture is incubated for 60 min at 55°C ± 2°C.

After the incubation, 0.05 g of lipase (Pancrelipase USP) in aqueous solution is added and the mixture is incubated for 30 min at 55°C ± 2°C at pH as is.

After the incubation the product is pasteurised at 75°C for 5 min.

### Example 6

100 g of egg yolk (salted, 10%) is heated to 43°C ± 2°C in a kettle and 0.50 g sodium citrate in aqueous solution is added. 0.05 g of protease enzyme (Prozyme 6) in aqueous solution is added and the mixture is incubated for 60 minutes at 55°C ± 2°C. The pH is then adjusted to pH 6.6 ± 0.1 with 20% KOH solution and 0.2 g of pancreatic lipase is added. The mixture is incubated for 60 min at 43°C ± 2°C, and pasteurised for 5 min at 75°C.

The enzyme modified egg yolk thus prepared was used to prepare a water-in-oil emulsion (mayonnaise-like) by mixing the following ingredients in a food processor:
- 20.0 g: water
- 20.0 ml: 10% acetic acid
- 30.0 g: enzyme modified egg yolk
- 240.0 g: soy oil
The viscosity of the emulsion thus prepared was found to be 40550 centipoises.

As a comparison, a water-in-oil emulsion was prepared in a similar manner but using untreated egg yolk instead of the enzyme modified egg yolk. The viscosity of the emulsion thus prepared was found to be 24900 centipoises.

This demonstrates the effectiveness of the sodium citrate buffered enzyme modified egg yolk in a cold sauce.

### Example 7

100 g of egg yolk (salted, 10%) was heated to 43°C ± 2°C in a Lee kettle and 0.05 g of protease enzyme (Prozyme 6, Amano International Enzyme) in aqueous solution was added and the mixture incubated for 60 min at 43°C ± 2°C at pH 6.1.

After the incubation, 0.05 g of lipase (Pancrelipase USP, Biocon) in aqueous solution was added and the mixture was incubated for 60 min at 43°C ± 2°C at pH as is (about 6.0).

The enzyme modified egg yolk thus prepared was used to prepare Hollandaise sauce in the following manner.

An oil-in-water emulsion was prepared by mixing at 40 rpm, the following ingredients:
- 292.0 g: water
- 18.6 g: spice blend
- 14.2 g: egg yolk, enzyme modified as prepared above
While mixing, the following ingredients were added in the order indicated:
- 10.0 g: starch
- 250.0 g: soy oil
- 7.9 ml: lemon juice
- 6.0 ml: vinegar
- 18.2 ml: water
The rotation speed was increased to 60 rpm and 150.0 g of soy oil were added.

The emulsion prepared was heated in a double boiler pan to 86°C then poured into a 600 ml beaker. The beaker was covered with saran wrap and room temperature equilibrated for 24 hours. The heat stability of the emulsion was assessed by taking 100 ml of the emulsion in a 500 ml beaker and heating at 100°C on a hot plate with constant agitation until free oil became separated from the emulsion. Timing was started when the emulsion reached 95°C and it was found that the emulsion was stable for 55 min and 42 s.

### Comparative Example

A Hollandaise sauce was prepared in a similar manner to that described in Example 7 except that the modified egg yolk was prepared in the following manner:

100 g of egg yolk (salted, 10%) at 1-5°C was charged to a Lee kettle and 0.033 g Phospholipase A in aqueous solution was added and the mixture was mixed for 15 minutes and incubated for 3-4 weeks at 3-4°C and at pH 6.1.

Using the same heat stability test as described in Example 7, the Hollandaise sauce emulsion was found to be stable for only 27.5 minutes i.e. less than half as long as using an enzyme modified egg yolk according to the process of the present invention.

## Claims

1. A process for the preparation of an emulsifying agent which comprises treating a biological material containing a lipid as well as a lipoprotein and/or a protein with a protease and a lipase and pasteurising the product characterised in that the treatement with the protease and the lipase is carried out sequentially in any order.

2. A process according to claim 1 wherein the biological material contains phospholipids and/or phospholipoproteins.

3. A process according to claim 1 wherein the biological material is egg yolk.

4. A process according to claim 1 wherein the treatment with the protease takes place before the treatment with the lipase.

5. A process according to claim 1 wherein the treatment with the protease takes place at a temperature from 0°C to 55°C.

6. A process according to claim 1 wherein the amount of protease used is from 0.025 to 2% by weight based on the weight of the biological material.

7. A process according to claim 1 wherein the treatment with the protease is carried out at a pH from 4 to 8.5.

8. A process according to claim 1 wherein after being treated with the protease and before pasteurisation, the biological material is treated with a lipase.

9. A process according to claim 1 wherein the treatment with the lipase is carried out with pancreatic lipase at a pH from 4 to 8.5.

10. A process according to claim 1 wherein the amount of lipase is from 0.025 to 3% by weight based on the weight of the biological material.

11. A process according to claim 1 wherein the treatment with the lipase is carried out at a temperature from 0°C to 55°C for a period of from 15 minutes to 3 hours.

12. A process according to claim 1 wherein the treatment with the lipase is carried out during the pasteurisation step.

13. An oil/water emulsion system containing an effective amount of a product prepared by a process according to any of claims 1 to 12.

## Patentansprüche

1. Verfahren zur Herstellung eines Emulgators, welches das Behandeln eines biologischen Materials, welches ein Lipid sowie ein Lipoprotein enthalt, mit einer Protease und einer Lipase und das Pasteurisieren des Produktes umfaßt, dadurch gekennzeichnet, daß die Behandlung mit der Protease und der Lipase nacheinander und in beliebiger Reihenfolge durchgeführt wird.

2. Verfahren nach Anspruch 1, wobei das biologische Material Phospholipide und/oder Phospholipoproteine enthält.

3. Verfahren nach Anspruch 1, wobei das biologische Material Eigelb ist.

4. Verfahren nach Anspruch 1, wobei die Behandlung mit der Protease vor der Behandlung mit der Lipase vorgenommen wird.

5. Verfahren nach Anspruch 1, wobei die Behandlung mit der Protease bei einer Temperatur von 0°C bis 55°C vorgenommen wird.

6. Verfahren nach Anspruch 1, wobei die verwendete Menge der Protease 0,025 bis 2 Gew.-% , bezogen auf das Gewicht des biologischen Materials, beträgt.

7. Verfahren nach Anspruch 1, wobei die Behandlung mit der Protease bei einem pH-Wert von 4 bis 8,5 durchgeführt wird.

8. Verfahren nach Anspruch 1, wobei das biologische Material nach der Behandlung mit der Protease und vor der Pasteurisierung mit einer Lipase behandelt wird.

9. Verfahren nach Anspruch 1, wobei die Behandlung mit der Lipase mit Pankreas-Lipase bei einem pH-Wert von 4 bis 8,5 durchgeführt wird.

10. Verfahren nach Anspruch 1, wobei die Menge der Lipase 0,025 bis 3 Gew.-% , bezogen auf das Gewicht des biologischen Materials, beträgt.

11. Verfahren nach Anspruch 1, wobei die Behandlung mit der Lipase bei einer Temperatur von 0° C bis 55° C während einer Zeitspanne von 15 Minuten bis zu 3 Stunden durchgeführt wird.

12. Verfahren nach Anspruch 1, wobei die Behandlung mit der Lipase während der Pasteurisierungsstufe durchgeführt wird.

13. Öl/Wasser-Emulsionssystem, welches eine wirksame Menge eines Produktes enthält, welches gemäß einem Verfahren nach einem der Ansprüche 1 bis 12 hergestellt worden ist.

## Revendications

1. Procédé de préparation d'un agent émulsionnant, qui consiste à traiter une substance biologique contenant un lipide ainsi qu'une lipoprotéine et/ou une protéine avec une protéase et une lipase et à pasteuriser le produit, caractérisé en ce que le traitement avec la protéase et la lipase est effectué de manière successive dans n'importe quel ordre.

2. Procédé suivant la revendication 1, dans lequel la substance biologique contient des phospholipides et/ou des phospholipoprotéines.

3. Procédé suivant la revendication 1, dans lequel la substance biologique est le jaune d'oeuf.

4. Procédé suivant la revendication 1, dans lequel le traitement avec la protéase a lieu avant le traitement avec la lipase.

5. Procédé suivant la revendication 1, dans lequel le traitement avec la protéase est effectué à une température de 0°C à 55°C.

6. Procédé suivant la revendication 1, dans lequel la quantité de protéase utilisée est comprise dans l'intervalle de 0,025 à 2 % en poids, sur la base du poids de la substance biologique.

7. Procédé suivant la revendication 1, dans lequel le traitement avec la protéase est effectué à un pH de 4 à 8,5.

8. Procédé suivant la revendication 1, dans lequel, après avoir été traitée avec la protéase et avant pasteurisation, la substance biologique est traitée avec une lipase.

9. Procédé suivant la revendication 1, dans lequel le traitement avec la lipase est effectué avec la lipase pancréatique à un pH de 4 à 8,5.

10. Procédé suivant la revendication 1, dans lequel la quantité de lipase est comprise dans l'intervalle de 0,025 à 3 % en poids, sur la base du poids de la substance biologique.

11. Procédé suivant la revendication 1, dans lequel le traitement avec la lipase est effectué à une température de 0°C à 55°C pendant un temps de 15 minutes à 3 heures.

12. Procédé suivant la revendication 1, dans lequel le traitement avec la lipase est effectué au cours de l'étape de pasteurisation.

13. Composition en émulsion huile/eau contenant une quantité efficace d'un produit préparé par un procédé suivant l'une quelconque des revendications 1 à 12.
